# EUROPÄISCHE PATENTANMELDUNG

(11) **EP 1 811 192 A2**
(43) Veröffentlichungstag der Anmeldung: **25.07.2007**
(21) Anmeldenummer: 06026390.2
(22) Anmeldetag: 20.12.2006
(51) Int. Cl.: F16D 23/14

(54) **Betätigungsvorrichtung für eine Kupplung eines Kraftfahrzeuges**

(30) Priorität: 19.01.2006 DE 102006002493
(71) Anmelder: LuK Lamellen und Kupplungsbau Beteiligungs KG, 77815 Bühl (DE)
(72) Erfinder: Mán, Lászlo, Dr., 77833 Ottersweier-Unzhurst (DE)

(57) **Zusammenfassung**

Die Erfindung schafft eine Betätigungsvorrichtung für eine Kupplung eines Kraftfahrzeuges, mit einem Betätigungslager (4), welches eine Drehbewegung in eine Axialbewegung umsetzt und sich das Betätigungslager kupplungsseitig gegen eine Federeineinrichtung (1) abstützt und antriebsseitig mittels eines Aktuators drehkraftbeaufschlagt ist, dadurch gekennzeichnet, dass das Betätigungslager zwei Reihen mit Wälzkörpern (3a,3b) besitzt, die sich an einem Laufring (2) abstützen, dessen Kontaktfläche mit beiden Reihen der Wälzkörper jeweils alternierende Erhebungen und Vertiefungen besitzt und die Erhebungen sowie Vertiefungen (14) der beiden Reihen zueinander um 180 Grad phasenversetzt sind und sich die Wälzkörper antriebsseitig gegen einen, einer jeweiligen Reihe zugeordneten Stützring (6,7) abstützen.

## Beschreibung

Die vorliegende Erfindung betrifft eine Betätigungsvorrichtung für eine Kupplung eines Kraftfahrzeuges, mit einem Betätigungslager, welches eine Drehbewegung in eine Axialbewegung umsetzt und sich das Betätigungslager kupplungsseitig gegen eine Federeinrichtung abstützt und antriebsseitig mittels eines Aktuators drehkraftbeaufschlagt ist.

Bisher wurden Kupplungen beispielsweise mittels eines Hebels betätigt, der eine unveränderliche Hebellänge besitzt und beispielsweise mittels eines elektromotorischen Antriebs zum Öffnen und/oder Schließen der Kupplung angetrieben werden konnte. Wenn nun über den Verfahrweg der Kupplungsbetätigung eine Betätigungskraft aufgebracht werden muss, so wurde zu diesem Zweck der Elektromotor, um ein entsprechend hohes Moment zur Verfügung zu stellen, mit entsprechenden Stromwerten beaufschlagt.

Der als Beispiel genannte Elektromotor des Aktuators muss also ein solches Moment aufbringen, dass er der von einer kupplungsseitig montierten Federeinrichtung in der Form beispielsweise einer Tellerfeder induzierten Federkraft entgegen wirken und zudem das Betätigungslager in Axialrichtung verschieben kann, sodass der Energieverbrauch durch den Aktuator entsprechend hoch ist.

Ausgehend hiervon liegt der vorliegenden Erfindung nunmehr die Aufgabe zugrunde, eine Betätigungsvorrichtung für eine Kupplung eines Kraftfahrzeuges zu schaffen, die eine Kupplung des Kraftfahrzeuges sicher öffnen und schließen kann und dabei aber das Bordnetz des Kraftfahrzeuges aufgrund deutlich verringerten Energieverbrauchs wesentlich weniger belastet.

Die zur Lösung dieser Aufgabe geschaffene Betätigungsvorrichtung weist diese Merkmale des Anspruchs 1 auf. Vorteilhafte Ausgestaltungen hiervon sind in den weiteren Ansprüchen beschrieben.

Die Erfindung schafft nunmehr eine Betätigungsvorrichtung für eine Kupplung eines Kraftfahrzeugs, mit einem Betätigungslager, welches eine Drehbewegung in eine Axialbewegung umsetzt und sich das Betätigungslager kupplungsseitig gegen eine Federeinrichtung abstützt und antriebsseitig mittels eines Aktuators drehkraftbeaufschlagt ist, wobei das Betätigungslager zwei radial beabstandete Reihen mit Wälzkörpern besitzt, die sich an einem gemeinsamen Laufring abstützen, dessen Kontaktfläche mit beiden Reihen der Wälzkörper jeweils alternierende Erhebungen und Vertiefungen besitzt und die Erhebungen sowie Vertiefungen der beiden Reihen zueinander um 180 Grad phasenversetzt sind.

Das Betätigungslager besitzt also zwei Reihen mit Wälzkörpern, die sich an einem gemeinsamen Laufring abstützen. An der Kontaktfläche des Laufrings mit den beiden Reihen der Wälzkörper sind Erhebungen und Vertiefungen vorgesehen, die sich beispielsweise periodisch wiederholen können und zwar so, dass die Erhebungen sowie Vertiefungen der beiden Reihen zueinander um 180 Grad phasenversetzt sind. Die Anordnung kann daher so sein, dass sich die Wälzkörper der einen Reihe gerade in einer Vertiefung der Kontaktfläche am Laufring angeordnet befinden, wenn sich die Wälzkörper der anderen Reihe gerade in Kontakt befinden mit einer Erhebung an der Kontaktfläche des Laufrings, die dieser anderen Reihe der Wälzkörper zugeordnet ist.

Es ist dabei nach der Erfindung vorgesehen, dass die beiden Reihen der Wälzkörper auf radial versetzten Laufbahnen angeordnet sind, also beispielsweise eine Reihe von Wälzkörpern entlang eines Kreises mit einem ersten Durchmesser an dem Laufring abrollt, während die zweite Reihe der Wälzkörper an einem Kreis mit größerem zweiten Durchmesser an dem Laufring abrollt und die beiden Kreise konzentrisch zueinander verlaufen, sodass in axialer Richtung betrachtet Bauraum eingespart werden kann.

Nach einer Weiterbildung der Erfindung ist vorgesehen, dass sich die Wälzkörper antriebsseitig gegen einen, einer jeweiligen Reihe zugeordneten Stützring abstützen, der mittels eines selbsthemmenden Gewindes an einer Aufnahme drehbar angeordnet ist. Mit dieser Konfiguration wird erreicht, dass aufgrund des selbsthemmenden Gewindes an der Aufnahme und des sich damit in Eingriff befindenden jeweiligen Stützringes die kupplungsseitig von der Federeinrichtung in Form beispielsweise einer Tellerfeder erzeugte Federkraft über das selbsthemmende Gewinde in die Aufnahme eingeleitet wird und somit nicht zu einer Rückdrehwirkung führt entgegen der antriebsseitigen Antriebswirkung durch einen Aktuator.

Nach einer Weiterbildung der Erfindung ist vorgesehen, dass der antriebsseitig vorgesehene Aktuator seine Drehkraft mittels eines Federbleches auf das Betätigungslager überträgt. Zu diesem Zweck sind Verbindungselemente, wie beispielsweise Zungen, an diesem Federblech vorgesehen, die sich mit an den Stützringen vorgesehenen Ausnehmungen zur Drehkraftübertragung in Eingriff befinden. Damit kann die von einem Aktuator stammende Drehkraft also über die Zungen des Federblechs auf die Stützringe übertragen werden, die die Drehkraft wiederum als Axialkraft auf die den beiden Stützringen jeweils zugeordneten Wälzkörper übertragen, die sich an dem kupplungsseitig vorgesehenen Laufring abstützen, der wiederum von einer Tellerfeder beaufschlagt wird.

Es ist weiterhin nach der Erfindung vorgesehen, dass der Aktuator das Betätigungslager in Drehkraftrichtung so beaufschlägt, dass eine Drehbewegung des Betätigungslagers in Folge einer Drehbewegung der Aufnahme, an dem das Betätigungslager angeordnet ist, zu einem alternierenden Kontakt der Wälzkörper mit den Erhebungen und Vertiefungen führt und das Betätigungslager beim jeweiligen Kontakt der Wälzkörper mit den Vertiefungen am Laufring von der Kraftbeaufschlagung durch die Tellerfeder befreit und um einen vorbestimmten Drehwinkel verdreht wird.

Befindet sich daher eine Wälzkörperreihe gerade mit den alternierend vorgesehenen Erhebungen an der Kontaktfläche des Laufrings in Kontakt, so befindet sich die andere Wälzkörperreihe mit den alternierend vorgesehenen Vertiefungen der Kontaktfläche an dem Laufring in Kontakt, sodass die von der Tellerfeder stammende Druckkraft über den Laufring in die sich mit den Erhebungen in Kontakt befindenden Wälzkörper eingeleitet wird, die sich an dem Stützring abstützen, welcher sich wiederum über ein selbsthemmendes Gewinde an der Aufnahme abstützt. Die Druckkraft der Tellerfeder wird also über diesen Kraftflussweg in die Aufnahme eingeleitet, während sich die Wälzkörper der anderen Reihe gerade im Bereich von Vertiefungen an dem Laufring befinden. Daher sind sie nicht der Druckkraftwirkung durch die Tellerfeder ausgesetzt, sodass die Drehkraftbeaufschlagung durch den Aktuator, der sich wiederum an dem Stützring dieser Reihe der Wälzkörper abstützt, zu einer Drehung des Betätigungslagers um einen vorbestimmten Drehwinkel führt. Zur Herbeiführung dieser Drehung ist ein schwach dimensionierter Elektromotor ausreichend, da dieser letztlich nur die Gewindereibung zwischen dem Stützring und der Aufnahme sowie Fluidreibung zwischen den Wälzkörpern und dem Laufring überwinden muss., Er wird jedoch nicht bei der Drehbewegung von der Federkraft der Tellerfeder beaufschlagt und er muss daher kein Kräftegleichgewicht mit dieser Tellerfederkraft herbeiführen. Daraus folgt, dass er nur wenig Drehkraft erzeugen muss und daher sein Energieverbrauch ausgesprochen niedrig ist, was wiederum dazu führt, dass das Bordnetz des Kraftfahrzeugs nur mit wenig Energieentnahme belastet wird. Die Wälzkörper der beiden Reihen können dabei an einem gemeinsamen Lagerkäfig angeordnet sein.

Mit der erfindungsgemäßen Konfiguration wird erreicht, dass die Federkraft von der Tellerfeder der Kupplung über die den Erhebungen des Laufrings befindlichen Wälzkörper und dem dieser Wälzreihe zugeordneten Stützring in die Aufnahme eingeleitet wird und eine Drehbewegung stattfinden kann. Dadurch wird die andere Wälzkörperreihe, die sich in Kontakt befindet mit an dem Laufring ausgebildeten Vertiefungen um einen vorbestimmten Drehwinkel weiter bewegt. Zur Herbeiführung dieser Drehbewegung muss nur wenig Drehkraft durch den Aktuator erzeugt werden, da es aufgrund dieser Drehbewegung um den vorbestimmten Drehwinkel zu einer entsprechenden axialen Verlagerung des Stützrings an der Aufnahme kommt und somit die Drehbewegung in eine Axialbewegung umgesetzt werden kann. Im betrachteten Augenblick wirkt keine Federkraft entgegen, da diese über den anderen Stützring in die Aufnahme eingeleitet wird.

Nach einer Weiterbildung der Erfindung ist vorgesehen, dass sich die Erhebungen und Vertiefungen der den jeweiligen Wälzkörperreihen zugeordneten Kontaktflächen am Laufring in Umfangsrichtung periodisch wiederholen. Diesen Erhebungen bzw. Vertiefungen sind dann an der Kontaktfläche des Laufrings mit der anderen Wälzkörperreihe Vertiefungen und Erhebung periodisch zugeordnet. Die Erhebungen und Vertiefungen können dabei bezüglich ihrer Höhe oder Tiefe eine Erstreckung von einigen Zehntel Millimeter besitzen.

Bei der vorstehend bereits erwähnten Aufnahme kann es sich in vorteilhafter Weise um ein Stützrohr handeln, an dem ein Außengewinde angebracht ist und das in einem Kupplungsgehäuse festgelegt ist.

An dem Federblech kann eine Mehrzahl von Zungen ausgebildet sein, die in jeweilige Schlitze in den Stützringen eingreifen und in Umfangsrichtung einen vorbestimmten Federweg aufgrund der Drehkraftbeaufschlagung durch den Aktuator zurücklegen. Die Drehkraftbeaufschlagung durch den Aktuator führt dazu, dass die Zungen in Drehkraftwirkung vorgespannt sind und es zu einer Verdrehung des jeweiligen Stützrings um einen vorbestimmten Drehwinkel kommt, wenn sich die Wälzkörper aufgrund der Drehung der Kurbelwelle der Brennkraftmaschine des Kraftfahrzeugs - der Verbrennungsmotor also läuft - in Drehung befinden, sodass die Wälzkörper aufgrund dieser Drehbewegung alternierend in den Bereich von Erhegungen und Vertiefungen kommen. Aufgrund dieser Drehkraftbeaufschlagung des Federblechs und damit der Stützringe - wie vorstehend bereits erläutert- kommt es durch den Aktuator zu einer Axialbewegung des Betätigungslagers an der Aufnahme, womit letztlich die Kupplung betätigt, also geöffnet oder geschlossen werden kann.

Die Erfindung wird nun im Folgenden anhand der Zeichnung näher erläutert.

Es zeigen:
Fig. 1 eine teilweise geschnittene Darstellung einer Ausführungsform einer Betätigungsvorrichtung nach der Erfindung;
Fig. 2 eine vergrößerte Darstellung eines Ausschnitts aus Fig. 1;
Fig. 3 eine perspektivische Darstellung eines Laufrings des Betätigungslagers nach der Erfindung;
Fig. 4 eine perspektivische Darstellung eines Federblechs; und
Fig. 5 eine teilweise geschnittene Darstellung des Federblechs nach Fig. 4, wie es sich an einem Stützring angeordnet befindet.

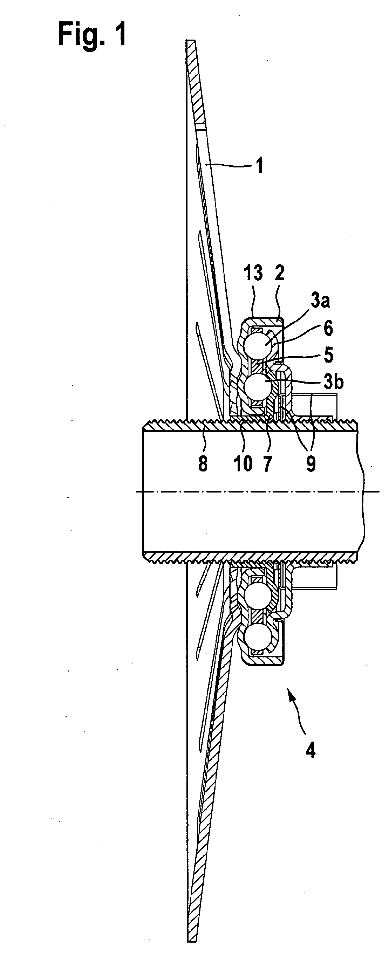

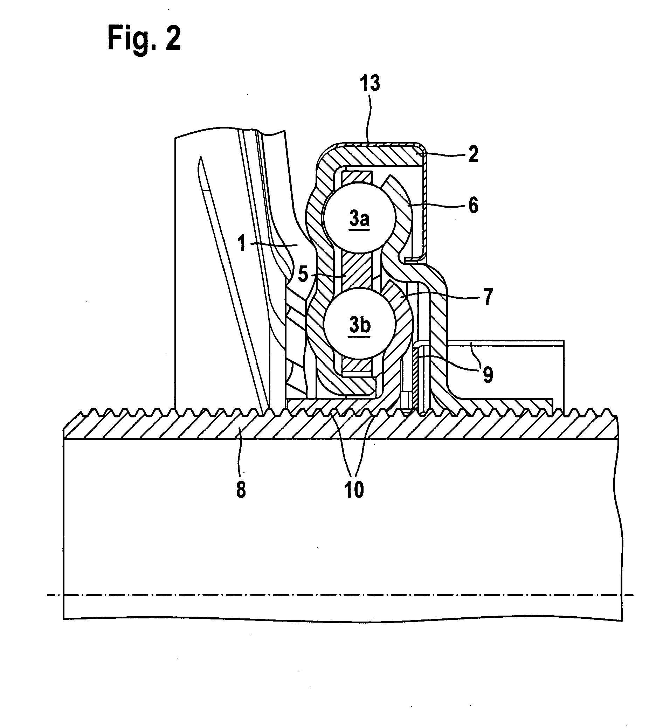

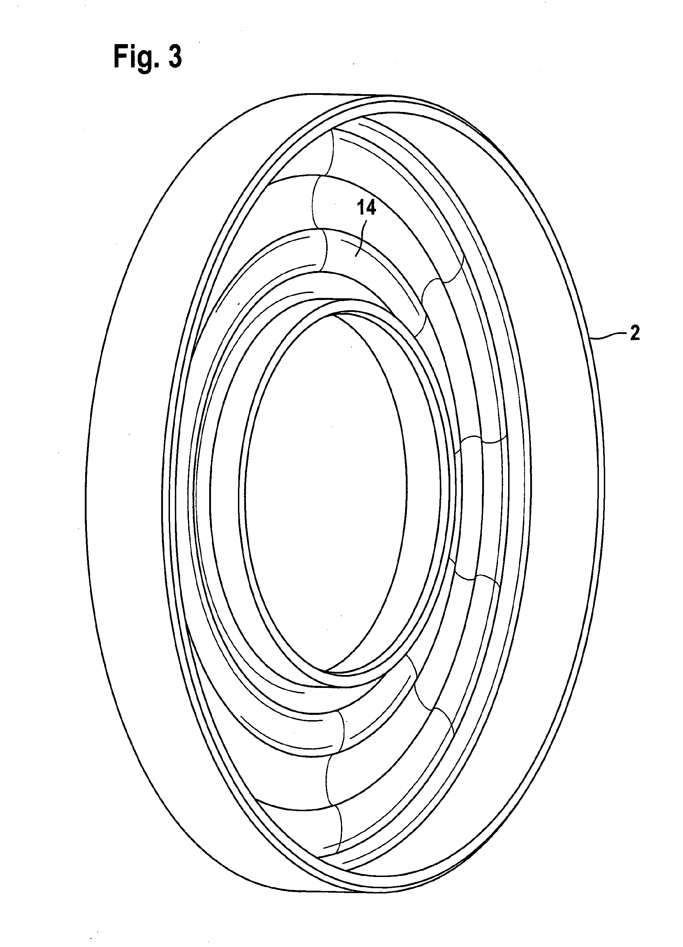

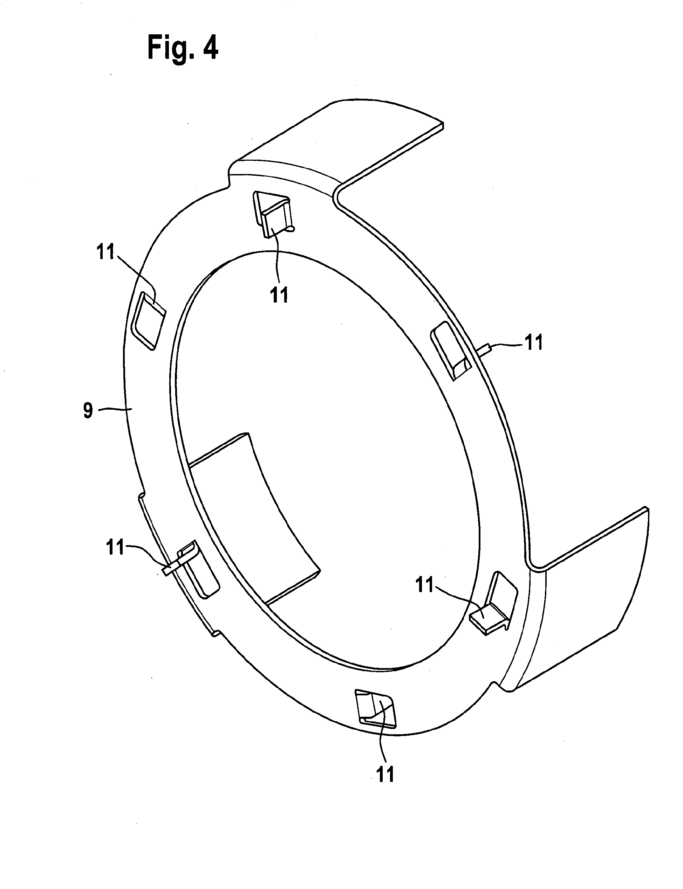

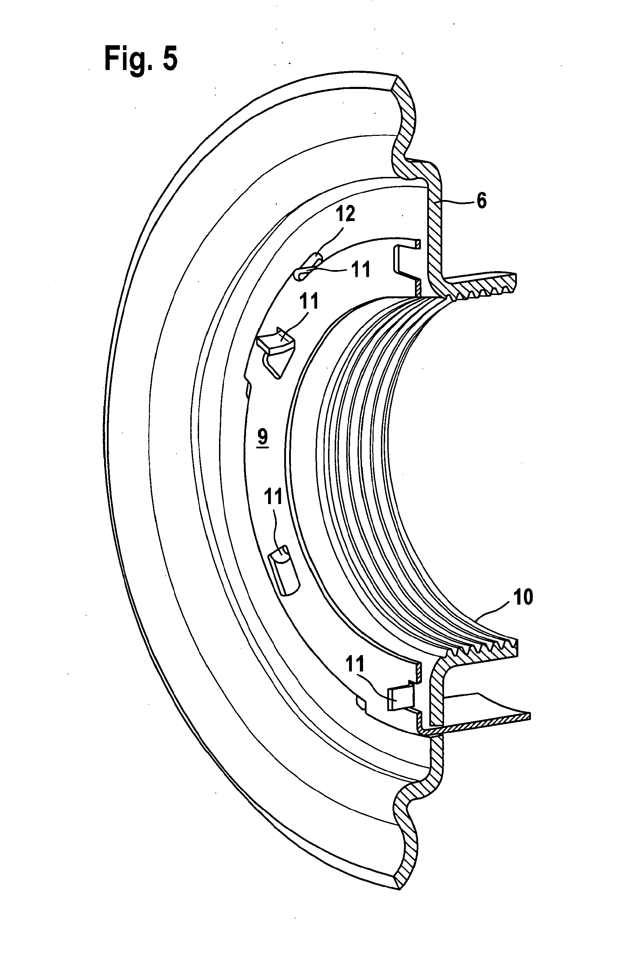

In den Figuren 1 bis 5 ist die erfindungsgemäße Betätigungsvorrichtung zeichnerisch dargestellt. Die Erfindung besteht im Wesentlichen aus einem neuartigen Betätigungslager 4, das zwei Kugelreihen aufweist. Die zwei Kugelreihen, bestehend aus den Wälzkörpern 3a und 3b, laufen einerseits auf einem gemeinsamen Laufring 2, der an einer Tellerfeder 1 anliegt. Andererseits laufen sie auf zwei voneinander getrennten Stützringen (Gegenlaufflächen) 6 und 7 ab, die sich mittels eines Gewindes 10, welches selbsthemmend ausgebildet ist, auf einem rohrförmigen Teil, dem Stützrohr 8, gegen die Axialkraft der Tellerfeder 1 abstützen.

Das Stützrohr 8 wird in einem Kupplungsgehäuse (nicht dargestellt) befestigt. Die Kugelreihen besitzen einen gemeinsamen Käfig 5. Die beiden Kugellaufbahnen des gemeinsamen Laufringes 2 weisen periodische Welligkeiten 14 in der Form von Erhebungen und Vertiefungen in der Höhe von einigen Zehntelmillimetern auf, die zueinander in einer Phasenverschiebung von 180 Grad angeordnet sind. Die Gegenlaufflächen an den Stützringen 6 und 7 haben keine solchen Erhebungen und Vertiefungen. Zwischen den getrennten Stützringen 6 und 7 ist ein Verstell- bzw. Federblech 9 eingebaut, das mit beiden Stützringen 6 und 7 durch radiale Schlitze in den Stützringen verbunden ist und einen eingeschränkten Federweg in Umfangsrichtung für die Stützringe 6 und 7 relativ zueinander erlaubt.

Wenn der Verbrennungsmotor des Kraftfahrzeuges läuft, laufen die Kugeln bzw. die Wälzkörper 3a und 3b im Betätigungslager 4 auch um. Durch die Welligkeit 14 des gemeinsamen Laufringes 2 stützt sich die Axialkraft abwechselnd auf der einen und der anderen Wälzkörperreihe 3a oder 3b ab. So werden die Stützringe 6 und 7 auch abwechselnd belastet.

Zum Verstellen der Betätigungsvorrichtung gibt man ein Verdrehmoment - beispielsweise über einen nicht dargestellten Elektromotor - auf das Federblech 9. Der Stützring 6 (oder 7), der gerade durch die Axialkraft belastet ist, bleibt durch die Reibkraft wegen der Axialkraft stehen und die Zungen 11 des Federbleches 9 biegen sich durch. Der andere, unbelastete Stützring 7 (oder 6) läßt sich dabei bis zu einem vordefinierten Anschlag durch Schlitze 12 in Umfangsrichtung des Stützrings 6 frei verdrehen. Laufen die Wälzkörper 3a, 3b weiter, so wird der vorher eingeklemmte Stützring 6 (oder 7) allmählich frei und die gespannten Zungen 11 können ihn weiter transportieren. Der vorher freie Ring 7 (oder 6) übernimmt allmählich die gesamte Last und gerät so in einem eingeklemmten Zustand.

Vorteilhaft ist insbesondere, dass das Verdrehmoment dabei sehr klein sein kann und im Wesentlichen nur von der Massenträgheit der getrennten Stützringe 6 und 7 sowie der angestrebten Verstellgeschwindigkeit abhängt. Je größer die Massenträgheit der Stützringe 6 und 7 und die Verstellgeschwindigkeit sind, desto größer wird das Verstellmoment.

Mit der vorliegenden Erfindung wird erstmals eine Betätigungsvorrichtung geschaffen, die mit wenig Kraft zu betätigen ist, d. h. den Großteil der Betätigungsenergie für die Kupplung vom Antriebsstrang holt.

### Bezugszeichenliste

- 1: Tellerfeder
- 2: Laufring
- 3a, 3b: Wälzkörper
- 4: Betätigungslager
- 5: Käfig
- 6: Stützring
- 7: Stützring
- 8: Stützrohr
- 9: Federblech
- 10: Gewinde
- 11: Zunge
- 12: Schlitz
- 13: Dichtblech
- 14: Welligkeit

## Patentansprüche

1. Betätigungsvorrichtung für eine Kupplung eines Kraftfahrzeuges, mit einem Betätigungslager (4), welches eine Drehbewegung in eine Axialbewegung umsetzt und sich das Betätigungslager (4) kupplungsseitig gegen eine Federeineinrichtung (1) abstützt und antriebsseitig mittels eines Aktuators drehkraftbeaufschlagt ist, **dadurch gekennzeichnet, dass** das Betätigungslager (4) zwei Reihen mit Wälzkörpern (3a, 3b) besitzt, die sich an einem Laufring (2) abstützen, dessen Kontaktfläche mit beiden Reihen der Wälzkörper (3a, 3b) jeweils alternierende Erhebungen und Vertiefungen (14) besitzt und die Erhebungen sowie Vertiefungen (14) der beiden Reihen zueinander um 180 Grad phasenversetzt sind und sich die Wälzkörper (3a, 3b) antriebsseitig gegen einen, einer jeweiligen Reihe zugeordneten Stützring (6, 7) abstützen.

2. Betätigungsvorrichtung nach Anspruch 1, **dadurch gekennzeichnet, dass** die beiden Reihen der Wälzkörper (3a, 3b) auf radial versetzten Laufbahnen angeordnet sind.

3. Betätigungsvorrichtung nach Anspruch 1 oder 2, **dadurch gekennzeichnet, dass** die Stützringe (6, 7) mittels eines selbsthemmenden Gewindes (10) an einer Aufnahme (8) drehbar angeordnet sind.

4. Betätigungsvorrichtung nach einem der vorstehenden Ansprüche, **gekennzeichnet durch** ein Federblech (9), mittels dem die Drehkraft das Betätigungslager (4) beaufschlägt.

5. Betätigungsvorrichtung nach Anspruch 4, **dadurch gekennzeichnet, dass** das Federblech (9) Zungen (11) aufweist, die sich mit Ausnehmungen der Stützringe (6, 7) zur Drehkraftübertragung in Eingriff befinden.

6. Betätigungsvorrichtung nach einem der vorstehenden Ansprüche, **dadurch gekennzeichnet, dass** der Aktuator das Betätigungslager (4) in Drehkraftrichtung beaufschlagt derart, dass eine Drehbewegung des Betätigungslagers (4) in Folge einer Drehbewegung der Aufnahme (8) zu einem alternierenden Kontakt der Wälzkörper (3a, 3b) mit den Erhebungen und Vertiefungen (14) führt und das Betätigungslager (4) beim jeweiligen Kontakt der Wälzkörper (3a, 3b) mit den Vertiefungen von der Kraftbeaufschlagung durch die Tellerfeder befreit und um einen vorbestimmten Drehwinkel verdreht und axial verlagert wird.

7. Betätigungsvorrichtung nach einem der vorstehenden Ansprüche, **dadurch gekennzeichnet, dass** die Wälzkörper (3a, 3b) an einem gemeinsamen Lagerkäfig (5) angeordnet sind.

8. Betätigungsvorrichtung nach einem der vorstehenden Ansprüche, **dadurch gekennzeichnet, dass** sich die Erhebungen und Vertiefungen (14) periodisch wiederholen.

9. Betätigungsvorrichtung nach einem der vorstehenden Ansprüche, **dadurch gekennzeichnet, dass** die Erhebungen und Vertiefungen (14) eine Höhe/Tiefe im Bereich von einigen Zehntel Millimetern besitzen.

10. Betätigungsvorrichtung nach einem der vorstehenden Ansprüche, **dadurch gekennzeichnet, dass** die beiden Reihen von Wälzkörpern (3a, 3b) koaxial zueinander angeordnet sind.

11. Betätigungsvorrichtung nach einem der Ansprüche 3 bis 10, **dadurch gekennzeichnet, dass**, die Aufnahme ein Stützrohr (8) ist und in einem Kupplungsgehäuse festgelegt ist.

12. Betätigungsvorrichtung nach einem der vorstehenden Ansprüche, **dadurch gekennzeichnet, dass** der Aktuator ein Elektromotor ist.

13. Betätigungsvorrichtung nach einem der Ansprüche 4 bis 12, **dadurch gekennzeichnet, dass** das Federblech (9) mittels einer Mehrzahl von Zungen (11), die in Schlitze (12) in den Stützringen (6, 7) eingreifen, einen bestimmten Federweg in Umfangsrichtung für die Stützringe (6, 7) und relativ zueinander ausbildet.

14. Betätigungsvorrichtung nach einem der vorstehenden Ansprüche, **dadurch gekennzeichnet, dass** die Wälzkörper (3a, 3b) Kugeln sind.
